# EUROPÄISCHE PATENTANMELDUNG

(11) **EP 2 666 802 A1**
(43) Veröffentlichungstag der Anmeldung: **27.11.2013**
(21) Anmeldenummer: 12168904.6
(22) Anmeldetag: 22.05.2012
(51) Int. Cl.: C08G 69/18

(54) **Gußpolyamide, Verfahren zu deren Herstellung und deren Verwendung**

(71) Anmelder: Rhein Chemie Rheinau GmbH, 68219 Mannheim (DE)
(72) Erfinder: Laufer, Wilhelm, 67158 Ellerstadt (DE); Eckert, Armin, 68794 Oberhausen-Rheinhausen (DE); Palzer, André, 68782 Brühl (DE)
(74) Vertreter: Siegers, Britta

(57) **Zusammenfassung**

Die vorliegenden Erfindung betrifft neue Gußpolyamide, Verfahren zu deren Herstellung und deren Verwendung.

## Beschreibung

Die vorliegenden Erfindung betrifft neue Gußpolyamide, Verfahren zu deren Herstellung und deren Verwendung.

Gusspolyamide sind besonders hochmolekulare Polyamide. Bei der Herstellung von Gusspolyamiden wird ein Lactam zusammen mit mindestens einem Katalysator und mindestens einem Aktivator in eine Form gegossen und dann in dieser Form anionisch polymerisiert. Die in der Form vorliegenden Ausgangsverbindungen polymerisieren dabei im Allgemeinen unter der Einwirkung von Wärme. Dabei entsteht ein homogener Werkstoff, welcher extrudierte Polyamide im Hinblick auf die Kristallinität übertrifft.

Gusspolyamide sind als thermoplastische Kunststoffe für die Fertigung komplexer Bauteile geeignet. Sie müssen im Gegensatz zu vielen anderen Thermoplasten nicht aufgeschmolzen werden, sondern entstehen durch eine anionische Polymerisation von einem Lactam in einer Form bei 120 bis 150°C bereits in wenigen Minuten. Dabei können alle bekannten Gießverfahren, wie Standguss, Spritzguss, Rotations- und Schleuderguss angewendet werden. Als Endprodukt erhält man jeweils Formteile aus einem hochmolekularen, kristallinen Polyamid, das sich durch ein niedriges Gewicht, eine hohe mechanische Belastbarkeit, sehr gute Gleiteigenschaften und eine hervorragende Chemikalienbeständigkeit auszeichnet und das - da die Formen nicht unter Druck gefüllt werden - nur geringe innere Spannungen aufweist. Gusspolyamide lassen sich Sägen, Bohren, Fräsen, Schleifen, Verschweißen und Bedrucken oder Lackieren; neben komplexen Hohlformen werden aus diesem Polymer beispielsweise auch Rollen für Personenaufzüge und Halbzeuge, wie zum Beispiel Rohre, Stäbe und Platten für den Maschinenbau und die Automobilindustrie, gefertigt.

Die Herstellung von Gusspolyamidteilen, ausgehend von niedrig viskosen Lactamschmelzen und einem Katalysator sowie einem Aktivator durch die sogenannte aktivierte anionische Polymerisation, ist an sich bekannt. Zu diesem Zweck werden üblicherweise zwei Mischungen aus Katalysator und Lactam bzw. Aktivator und Lactam in Form einer flüssigen Schmelze miteinander vermischt und anschließend in der Gussform polymerisiert, siehe EP 2447302 und WO2012/045806. Nachteilig bei den derzeitigen Gußpolyamiden sind jedoch die bei der Herstellung notwendigen hohen Temperaturen und die hohen Anteile an Aktivator, die das Procedere unwirtschaftlich machen. Weitere Nachteile bei der Herstellung der Gusspolyamidteile nach dem Spritzgussverfahren sind die langen Standzeiten, die die Produktion unwirtschaftlich machen. Eine Aufgabe der vorliegenden Erfindung bestand somit darin, Gußpolyamide bereitzustellen, die mit kurzen Standzeiten und/oder bei niedrigen Temperaturen hergestellt werden können und die Nachteile des Standes der Technik nicht aufweisen.

Überraschenderweise wurde nun gefunden, dass die erfindungsgemäßen Gußpolymide dieses Eigenschaftsprofil aufweisen.

Gegenstand der vorliegenden Erfindung sind somit Gußpolyamide erhältlich durch die Umsetzung von
a) mindestens einem Katalysator für die anionische Polymerisation von Lactamen;
b) mindestens einem Aktivator für die anionische Polymerisation,
c) mindestens einem tert.-Amin und/oder Dibutylzinndilaurat als Coaktivator und
d) mindestens einem Lactam bei Temperaturen von mindestens 80°C.

In einer bevorzugten Ausführungsform der Erfindung handelt es sich bei dem Katalysator um mindestens eine Verbindung, ausgewählt aus der Gruppe der Lactam-Magnesium-Halogenide, Alkali-Alumo-Dilactamate, Alkali- und/oder Erdalkalilactamate.

Als Katalysatoren im Sinne der Erfindung können Lactam-Magnesium-Halogenide, bevorzugt Bromide, Alkali-Alumo Dilactamate, bevorzugt Natrium, Alkali- und/oder Erdalkalilactamate, bevorzugt Natrium, Kalium und/oder Magnesium, einzeln oder im Gemisch, eingesetzt werden, wobei die Begriff Halogenide, Alkali sowie Erdalkali die dem aus dem Periodensystem der Elemente entsprechende Bedeutung haben.

Die vorgenannten Katalysatoren sind handelsüblich und sind beispielsweise bei der Firma Rhein Chemie Rheinau GmbH oder bei der Firma KatChem spol.s.r.o. erhältlich.

Als Aktivatoren im Sinne der Erfindung können Isocyanate, Isocyanurate, Biurete, Allophanate, Uretdione und/oder Carbodiimide als Einzelverbindung oder in Form einer Mischung eingesetzt werden. Ebenfalls einsetzbar im Sinne der Erfindung sind Aktivatoren, die geblockt sind z. B. mit Lactamen, besonders bevorzugt Caprolactam, mit Phenolen, Oximen und/oder Epoxiden ebenso wie lösemittelhaltige Aktivatoren. Als Lösemittel eignen sich: N-Alkylpyrrolidone, vorzugsweise. N-Methylpyrrolidon und N-Ethylpyrolydon, Polyglycole,vorzugsweise Polyglycol DME 200, Dipropylenglycol DME oder Tetraethylenglykol DME.

Isocyanate im Sinne der Erfindung sind vorzugsweise Diisocyanate, vorzugsweise 2,4-Toluylendiisocyanat (TDI), 2,6-Toluylendiisocyanat, ein Gemisch aus 2,4-Toluylendiisocyanat und 2,6-Toluylendiisocyanat, Hexamethylen-1,6-diisocyanat, Cyclohexan-1,4-diisocyanat, Xylylendiisocyanat, Isophorondiisocyanat, 1,5-Naphthalindiisocyanat, 4,4'-Diphenylmethandiisocyanat, 2,4'-Diphenyl-methandiisocyanat, 2,2'-Diphenylmethandiisocyanat, 4,4'-Diphenyldimethyl-methandiisocyanat, 1,3-Phenylen-diisocyanat, 1,4-Phenylendiisocyanat, Dicyclohexylmethan-4,4'-diisocyanat, Dicyclohexylmethan-2,4'-diisocyanat, Dicyclohexyhnethan-2,2'-diisocyanat, Methylcyclohexan-diisocyanat, Tetramethylxylylendiisocyanat, 2,6-Diisopropylphenylen-isocyanat und deren Gemische. Besonders bevorzugt ist Hexamethylen-1,6-diisocyanat. Die vorgenannten Verbindungen sind handelsüblich und sind beispielsweise bei der Firma Bayer MaterialScience AG erhältlich.

Isocyanurate im Sinne der Erfindung sind vorzugsweise Verbindungen der Formel (I) 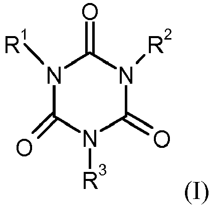 mit R¹, R² und R³ jeweils unabhängig voneinander -(CH₂)ₘ-N=C=O oder-(CH₂)_{q}-[(C₆H₃)(Me/Et)₃(N=C=O)] sind, und m = 1 - 12, q = 0 - 6 und Me für Methyl und Et für Ethyl steht, wobei
R¹, R² und R³ vorzugsweise gleich sind.

Dabei sind die folgenden Verbindungen der Formel (II) 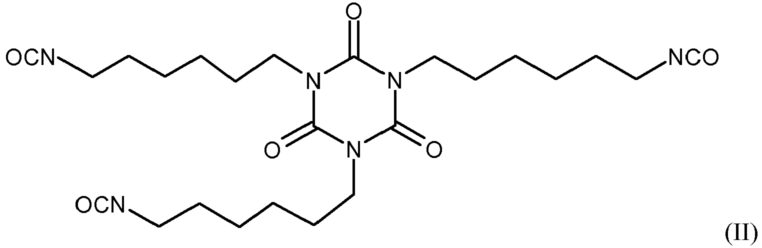 und der Formel (III) 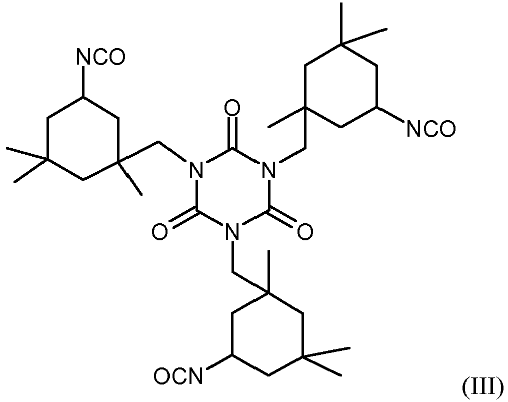 bevorzugt.

Die vorgenannten Verbindungen sind handelsüblich und sind beispielsweise bei der Firma Bayer MaterialScience AG erhältlich.

Biurete im Sinne der Erfindung sind vorzugsweise Verbindungen der Formel (IV) 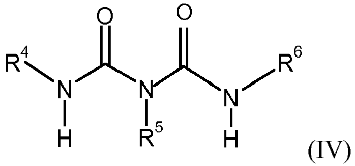 mit R⁴, R⁵ und R⁶ jeweils unabhängig voneinander -(CH₂)ₚ-N=C=O, mit p = 1 - 12, wobei
R⁴, R⁵ und R⁶ vorzugsweise gleich sind. In einer besonders bevorzugten Ausführungsform entsprechen R⁴, R⁵ und R⁶ -(CH₂)ₚ-N=C=O und p ist 6, d.h. einem Biuret der Formel (V)

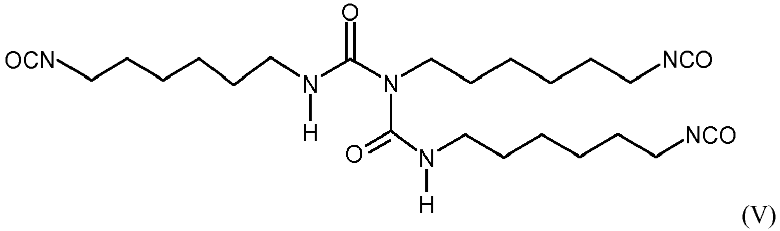

Die vorgenannten Verbindungen sind handelsüblich und sind beispielsweise bei der Firma Bayer MaterialScience AG erhältlich.

Uretdione im Sinne der Erfindung sind Umsetzungsprodukte von mindestens zwei Isocyanaten unter der Ausbildung von Dioxodiazetidin-Bindungen:

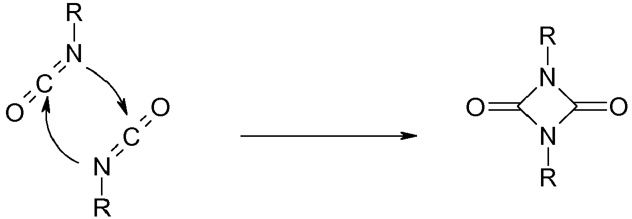

Die Herstellung ist dem Fachmann an sich bekannt. Die Verbindungen können beispielsweise gemäß der in EP 1 422 223 A1 beschriebenen Verfahren hergestellt werden.

Das Uretdion kann ein Dimer, Trimer, Oligomer oder Polymer sein.

Geeignete Beispiele für Uretdione, sind dem Fachmann an sich bekannt. Bevorzugt sind Uretdione, die ausgehend von einem aliphatischen oder aromatischen Isocyanat erhalten werden. Die aromatischen Isocyanate weisen vorzugsweise 6 bis 20 Kohlenstoffatome, besonders bevorzugt 6 bis 15 Kohlenstoffatome, auf. Entsprechende aromatische monomere Isocyanate können beispielsweise ausgewählt werden aus der Gruppe, bestehend aus 2,4-Diisocyanatotoluol, 2,6-Diisocyanatotoluol, 1,5-Naphthylendiisocyanat, 4,4'-Methylen-diphenyldiisocyanat, 1,3-Bis-(3-isocyanato-4-methylphenyl)-2,4-dioxodiazetidin, N,N'-Bis-(4-methyl-3-isocyanatophenyl)-Harnstoff und Tetramethylxylylendiisocyanat. Von diesen aromatischen Isocyanaten sind 2,4-Diisocyanatotoluol, 2,6-Diisocyanatotoluol und 4,4'-Methylen-bis(phenyldiisocyanat) bevorzugt. Insbesondere bevorzugt sind 2,6-Diisocyanatotoluol und 4,4'-Methylen-bis(phenyldiisocyanat).

Die aliphatischen Isocyanate weisen vorzugsweise 6 bis 20 Kohlenstoffatome, besonders bevorzugt 6 bis 15 Kohlenstoffatome, auf. Entsprechende aliphatische monomere Isocyanate können beispielsweise ausgewählt werden aus der Gruppe, bestehend aus Isophorondiisocyanat, 1,4-Cyclohexyldiisocyanat, 1,1-Methylen-bis-(4-isocyanatocyclohexan), 1,2-Bis-(4-isocyanatononyl)-3-heptyl-4-pentyl-cyclohexan und Hexamethylen-1,6-diisocyanat. Hierbei ist die Verwendung von Isophorondiisocyanat und Hexamethylen-1,6-diisocyanat bevorzugt.

Die vorgenannten Verbindungen sind handelsüblich und sind beispielsweise bei der Firma Rhein Chemie Rheinau GmbH oder die der Bayer MaterialScience AG erhältlich.

Allophanate im Sinne der Erfindung sind vorzugsweise Verbindungen der Formel (VI) 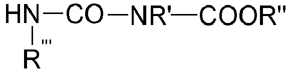 wobei R' und R" unabhängig voneinander ein Alkylrest mit 1 bis 20 Kohlenstoffatomen oder ein Arylrest mit 6 bis 20 Kohlenstoffatomen ist,
und R'" die Bedeutung eines Alkylrestes mit 1 bis 20 Kohlenstoffatomen hat

Diese Verbindungen sind im Allgemeinen durch Umsetzung beliebiger urethan- und/oder harnstoffgruppenhaltiger Ausgangsverbindungen, enthaltend Einheiten der allgemeinen Formel (R"OOC-NHR') mit Monoisocyanaten der allgemeinen Formel R"'-NCO oder mit Diisocyanaten der allgemeinen Formel OCN-A-NCO zugänglich, wobei R'" bzw. A bevorzugt ein Alkylrest mit 1 bis 20 Kohlenstoffatomen oder ein Arylrest mit 6 bis 20 Kohlenstoffatomen ist und R' und R" unabhängig voneinander für Alkylrest mit 1 bis 20 Kohlenstoffatomen oder ein Arylrest mit 6 bis 20 Kohlenstoffatomen stehen.

Als Monoisocyanate eignen sich beliebige aromatische, aliphatische und cycloaliphatische Monoisocyanate mit bis zu 20 Kohlenstoffatomen, wie Methylisocyanat, Isopropylisocyanat, n-Butylisocyanat, n-Hexylisocyanat, Cyclohexylisocyanat, Stearylisocyanat, die gegebenenfalls halogenierten Phenylisocyanate, 1-Naphtylisocyanat, die gegebenenfalls chlorierten oder fluorierten m-, o-, und p-Toloylisocyanate, p-Isopropylphenylisocyanat, 2,6-Diisopropyl-phenylisocyanat und p-Toluolsulfonyldiisocyanat.

Als Diisocyanate eignen sich beliebige aromatische, aliphatische und cycloaliphatische Diisocyanate mit 6 bis 40 Kohlenstoffatomen, vorzugsweise 6 bis 15 Kohlenstoffatomen, wie Isophorondiisocyanat, 1,4-Cyclohexyldiisocyanat, 1,1-Methylen-bis-(isocyanatohexan), 1,2-Bis-(4-Isocyanatononyl)-3-heptyl-4-pentylcyclohexan, Hexamethylen-1,6-diisocyanat, 2,4-Diisocyanatotoluol, 2,6-Diisocyanatotoluol, 1,5-Naphthylendiisocyanat, 4,4'-Methylen-diphenyldiisocyanat, 1,3-Bis-(3-isocyanto-4-methylphenyl)-2,4-dioxodiazetidin, N,N'-Bis-(4-methyl-3-isocyanatophenyl)-Harnstoff und Tetramethylxylylendiisocyanat. Bevorzugt hiervon ist Hexamethylen-1,6-diisocyanat.

Die im Rahmen der vorliegenden Erfindung besonders bevorzugten Allophanate sind Verbindungen der Formel (VII) 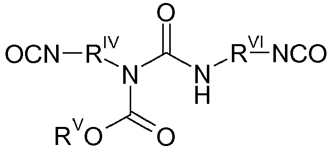 wobei R^{IV} und R^{VI} innerhalb des Moleküls gleich oder verschieden sein können und C₁-C₆-Allcyl, vorzugsweise -(CH₂)₆- bedeuten, und R^{V} C₁-C₆-Alkyl entspricht.

Entsprechende Allophanate sowie deren Herstellung sind beispielsweise in der EP 0 000 194A beschrieben, dessen diesbezügliche Offenbarung in die vorliegende Erfindung unter Bezugnahme eingeschlossen wird. Die vorgenannten Verbindungen sind handelsüblich und sind beispielsweise bei der Firma Bayer MaterialScience AG erhältlich.

Carbodiimide im Sinne der Erfindung sind vorzugsweise Verbindungen der Formel (VIII)

R¹¹-(-N=C=N-R¹²-)ₘ,-R¹³ (VIII),

in der
m einer ganzen Zahl von 1 bis 500 entspricht,
R¹² für C₁ - C₁₈-Alkylen, C₅-C₁₈-Cycloalkylen-, Arylen und/oder C₇-C₁₈- Aralkylen steht
R¹¹ für R-NCO, R-NHCONHR⁹, R-NHCONR⁹R⁷ oder R-NHCOOR⁸ steht und
R¹³ steht -NCO, -NHCONHR⁹, -NHCONR⁹R⁷ oder -NHCOOR⁸ steht,
wobei in R¹¹ unabhängig voneinander R⁹ und R⁷ gleich oder verschieden sind und einen C₁-C₆-Alkyl-, C₆-C₁₀-Cycloalkyl- oder C₇-C₁₈-Aralkylrest darstellen und R⁸ eine der Bedeutungen von R¹¹ hat oder einen Polyester- oder Polyamidrest oder -(CH₂)ₕ-O-[(CH₂)ₖ-O]_{g}-R¹⁰ entspricht,
mit h = 1-3, k= 1-3, g = 0-12, wobei
R¹⁰ die Bedeutung von H oder C₁-C₄-Alkyl hat.

Ebenfalls einsetzbar sind auch Gemische von Carbodiimiden der Formel (VIII), inklusive der entsprechenden Oligomere und/oder Polymere, wobei polymere Carbodiimide bevorzugt sind.

Die Verbindungen nach Formel (VIII) sind kommerziell erhältlich, z.B. bei der Firma Rhein Chemie Rheinau GmbH oder lassen sich nach den dem Fachmann geläufigen Verfahren herstellen, wie z.B. beschrieben in DE-A-11 30 594 oder US 2 840 589 oder durch die Kondensation von Diisocyanaten unter Abspaltung von Kohlendioxid bei erhöhten Temperaturen, z.B. bei 40 °C bis 200 °C, in Gegenwart von Katalysatoren. Als Katalysatoren haben sich z.B. starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Carbonsäuremetallsalze und nicht basische Organometallverbindungen verwendet werden.

Die vorgenannten Verbindungen sind handelsüblich und sind beispielsweise bei der Firma Rhein Chemie Rheinau GmbH erhältlich.

Geblockte Aktivatoren, vorzugsweise mit Lactamen, besonders bevorzugt Caprolactam, oder mit Phenolen, Oximen und/oder Epoxiden geblockte Aktivatoren sind beispielsweise herstellbar über die Umsetzung mindestens einer Verbindung der Formel (I) bis (VIII) mit mindestens einem Lactam, Caprolactam, Phenolen, Oxim und/oder Epoxid bei Temperaturen von 80 bis 100°C nach den, dem Fachmann geläufigen Verfahren.

In einer weiteren bevorzugten Ausführungsform der Erfindung handelt es sich bei dem Coaktivator tert.-Amin um Triethylendiamin, 1,3,5-tris(3-(dimethylamino)propyl, Dimetylcyclohexylamin, N,N-dimorpholinodiethylether, Bis(N,N-dimethylaminoethyl)ether, N-Ethylmorpholin, Pentamethyldipropylentriamin und/oder N,N-Dimethylpiperazin

Die Coaktivatoren Dibutylzinnlaurat und/oder tert. Amin können in einer weiteren Ausführungsform der Erfindung auch optional gelöst in Lösemittel, wie z. B. Glycolen, eingesetzt werden. Die vorgenannten Verbindungen sind handelsüblich und sind beispielsweise bei der Firma Rhein Chemie Rheinau GmbH oder BASF AG erhältlich.

In einer weiteren bevorzugten Ausführungsform der Erfindung handelt es sich bei dem Lactam d) um eine Verbindung der allgemeinen Formel 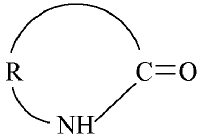 , wobei R eine Alkylengruppe mit 3 bis 13 Kohlenstoffatomen darstellt.

Bevorzugt handelt es sich dabei um Capro-Lactam und/oder Laurin-Lactam. Diese sind kommerziell erhältlich z.B. bei der Firma Lanxess Deutschland GmbH.

In einer weiteren bevorzugten Ausführungsform enthält das erfindungsgemäße Gußpolyamid, jeweils bezogen auf Lactam, folgende Anteile an
Katalysator a): 0,1 bis 3 Gew.%, bevorzugt 0,2 bis 1,5 Gew.%,
Aktivator b): 0,1 bis 2 Gew.%, bevorzugt 0,5 bis 1 Gew.% und
Coaktivator c): 0,0005 bis 0,2 Gew.%, bevorzugt 0,005 bis 0,1 Gew.%.

In einer bevorzugten Ausführungsform der Erfindung ist das Gußpolyamid erhältlich durch die Umsetzung von
a) Natriumlactamat, vorzugsweise als 18-20 Gew.%ige Caprolactam-Lösung als Katalysator,
b) mindestens einem Vertreter, ausgewählt aus der Gruppe Hexamethylen-1,6-diisocyanat, mit Caprolactam geblocktes Hexamethylen-1,6-diisocyanat, einem Biuret der Formel (IV) mit p = 6 und/oder ein Uretdion auf Basis von 2,4-Diisocyanatotoluol,
c) Triethylendiamin und
d) Caprolactam.

In einer weiteren bevorzugten Ausführungsform enthält das erfindungsgemäße Gußpolyamid bezogen auf Lactam folgende Anteile an
Katalysator a): 0,5 bis 3 Gew.%, bevorzugt 1 bis 2 Gew.% Natriumlactamat, vorzugsweiseals 18 -20 Gew.%ige Caprolactam-Lösung),
Aktivator b): 0,1 bis 2 Gew.%, bevorzugt 0,5 bis 1 Gew.% von mindestens einem Vertreter, ausgewählt aus der Gruppe Hexamethylen-1,6-diisocyanat, mit Caprolactam geblocktes Hexamethylen-1,6-diisocyanat, Biuret der Formel (IV) mit p = 6 und/oder ein Uretdion aus Basis von 2,4-Diisocyanatotoluol und
Coaktivator c): 0,0005 bis 0,2 Gew.%, bevorzugt 0,005 bis 0,1 Gew.% Triethylendiamin, bezogen auf Caprolactam.

Ein weiterer Gegenstand der vorliegenden Erfindung ist ein Verfahren zur Herstellung der erfindungsgemäßen Gußpolyamide, wonach
- mindestens eine Lactamschmelze mit Katalysator (a) und gegebenenfalls Coaktivator c) und
- mindestens eine Lactamschmelze mit Aktivator (b) und gegebenenfalls Coaktivator c) und gegebenenfalls
- eine Lactamschmelze mit Coaktivator (c), wobei der Coaktivator c) in mindestens einer der vorgenannten Lactamschmelzen enthalten sein muss,
bei Temperaturen von mindestens 80°C, bevorzugt im Bereich von 100° bis 160°C, besonders bevorzugt im Bereich von 110 bis 130° C, vermischt und in einer Form polymerisiert werden.

Das Vermischen erfolgt dabei vorzugsweise kontinuierlich oder diskontinuierlich z. B. in einem statischen Mischer, Rührbehälter, Extruder oder mit einer Förderschnecke innerhalb eines Zeitraumes von 1 Sekunde bis 10 Minuten, bevorzugt im Bereich von 1 bis 120 Sekunden.

In einer Ausführungsform der Erfindung werden Lactamschmelze (a) und Lactamschmelze (b) und gegebenenfalls. Lactamschmelze (c) bei Temperaturen zwischen 80 und 160°C, vorzugsweise 100 und 140°C zur Polymerisation zusammengegeben. Die Polymerisation erfolgt nach den, dem Fachmann geläufigen Verfahren, wie z.B. beschrieben in Kunststoffhandbuch, Bd.3/4, Technische Thermoplaste, Hanser Fachbuch, Seiten 413 - 430. Dabei wird die Lactamschmelzen vorzugsweise gerührt. Einsetzbar hierfür sind Mischaggregate, wie z.B. Rührkessel.

In einer weiteren Ausführungsform der Erfindung werden Lactamschmelze (a) und Lactamschmelze (b) und gegebenenfalls. Lactamschmelze (c) zuerst abgekühlt, konfektioniert, gelagert und anschließend aufgeschmolzen und bei Temperaturen zwischen 80 und 160°C, vorzugsweise 100 und 140°C zur Polymerisation zusammengegeben.

In einer anderen Ausführungsform der Erfindung werden Lactamschmelze (a) und Lactamschmelze (b) und gegebenenfalls. Lactamschmelze (c) zuerst bei 80 - 90 °C kurzzeitig gemischt, abgekühlt, konfektioniert, gelagert und anschließend aufgeschmolzen und bei Temperaturen zwischen 80 und 160°C, vorzugsweise 100 und 140°C zur Polymerisation zusammengegeben.

In einer weiteren Ausführungsform der Erfindung werden zu der Lactamschmelze (a) und/oder Lactamschmelze (b) und gegebenenfalls Lactamschmelze (c) noch weiteres Lactam und/oder weiterer Katalysator a) und/oder gegebenenfalls weitere Additive, wie Schlagzähmodifikatoren, vorzugsweise Polyetheramin-Copolymere, Glasfasern, Endlosglassfasern, Kohlefasern, Aramidfasern und/oder Verarbeitungshilfsmittel, wie z.B. hochmolekulare Polyole, Verdicker,. vorzugsweise Aerosile, UV- und Thermostabilisatoren, Leitfähigkeitsverbesserer, vorzugsweise Russe und Graphite, ionische Flüssigkeiten, Markierungsstoffe und/oder Farben zugegeben.

Die Lactamschmelze (a) und Lactamschmelze (b) werden vorzugsweise in Mengenverhältnissen von 1:3 bis 3:1, besonders bevorzugt in Mengenverhältnissen von 1 : 1 eingesetzt.

In einer weiteren bevorzugten Ausführungsform der Erfindung enthält das Gußpolyamid zusätzlich mindestens eine weitere Komponente, ausgewählt aus Füll- und/oder Verstärkungsstoffen, Polymeren und/oder weiteren Zusatzstoffen, die sich chemisch von einzusetzendem Katalysator und Aktivator unterscheiden.

Füll- und/oder Verstärkungsstoff im Sinne der Erfindung sind organische oder anorganische Füll- und/oder Verstärkungsstoffe. Bevorzugt sind anorganische Füllstoffe, insbesondere Kaolin, Kreide, Wollastonit, Talkum, Calciumcarbonat, Silikate, Titandioxid, Zinkoxid, Graphit, Graphene, Glaspartikel (z.B. Glaskugeln), nanoskalige Füllstoffe, (wie Kohlenstoff-Nanoröhren carbonanotubes), carbon black, Schichtsilikate, nanoskalige Schichtsilikate, nanoskaliges Aluminiumoxid (Al₂O₃), nanoskaliges Titandioxid (TiO₂) und/oder nanoskaliges Siliciumdioxid (SiO₂).

Weiterhin bevorzugt ist der Einsatz von Faserstoffen als Füll- und/oder Verstärkungsstoff. Die Füll- und/oder Verstärkungsstoffe werden in der Regel ausgewählt aus der Gruppe umfassend Mineralien in für Thermoplastanwendungen üblicher Korngröße insbesondere Kaolin, Kreide, Wollastonit oder Talkum, Kohlenstoff- oder Glasfasern, vorzugsweise gemahlene Glasfasern, besonders bevorzugt Glas- und Kohlenstofffasern.

Besonders bevorzugt kommen ein oder mehrere Faserstoffe zum Einsatz, ausgewählt aus bekannten anorganischen Verstärkungsfasern, insbesondere Borfasern, Glasfasern, Kohlenstofffasern, Kieselsäurefasern, Keramikfasern und Basaltfasern; organischen Verstärkungsfasern, insbesondere Aramidfasern, Polyesterfasern, Nylonfasern, Polyethylenfasern; und Naturfasern, insbesondere Holzfasern, Flachsfasern, Hanffasern und Sisalfasern. Insbesondere bevorzugt ist der Einsatz von Glasfasern, insbesondere Schnittglasfasern, Kohlenstofffasern, Aramidfasern, Borfasern, Metallfasern und/oder Kaliumtitanatfasern.

Insbesondere können auch Mischungen der genannten Füll- und/oder Verstärkungsstoffe eingesetzt werden. Besonders bevorzugt werden als Füll- und/oder Verstärkungsstoffe Glasfasern und/oder Glaspartikel, insbesondere Glaskugeln, ausgewählt.

Die Menge an einzusetzenden Füll- und/oder Verstärkungsstoffen beträgt vorzugsweise 30 bis 90 Gew.-%, insbesondere von 30-80 Gew.-%, bevorzugt 30 bis 50 Gew.-%, weiterhin bevorzugt von 50 bis 90 Gew.-%.

Polymere im Sinne der Erfindung sind: Polystyrol, Styrol-Copolymersiate, insbesondere Styrol-Acrylnitril-Copolymere (SAN), Acrylnitril-Butadien-Styrol-Copolymere (ABS) oder StyrolButadien-Copolymere (SB), Polyphenylenoxidether, Polyolefine, insbesondere Polyethylen (HTPE (high-temperature-polyethylene), LTPE (low-temperature-polyethylene), Polypropylen oder Polybuten-1, Polytetrafluorethylen, Polyester, insbesondere Polyethylenterephthalat (PET); Polyamide, Polyether, insbesondere Polyethylenglykol (PEG), Polypropylenglykol oder Polyethersulfone (PESU oder PES); Polymere aus Vinylgruppen enthalten Monomeren, insbesondere Polyvinylchlorid, Polyvinylidenchloride, Polystryrol, schlagzäh-modifiziertes Polystyrol, Polyvinylcarbazol, Polyvinylacetat oder Polyvinylalkohol, Polyisobutylene Polybutadien und/oder Polysulfone. Es ist weiterhin die Verwendung von Copolymeren als Polymer möglich, die aus den Monomereinheiten der oben genannten Polymere bestehen.

In einer weiteren Ausführungsform der Erfindung kann das einzusetzende Polymer Gruppen enthalten, die zur Bildung von Block- und/oder Pfropf-Copolymeren mit dem aus den Monomeren gebildeten Polymeren, geeignet sind. Beispiele für solche Gruppen sind Epoxy-, Amin-, Carboxyl-Anhydrid-, Oxazolin-, Carbodiimid-, Urethan-, Isocyanat- und Lactam-Gruppen. Polymere mit Carbodiimid-Gruppen werden dann eingesetzt, wenn kein Carbodiimid als Aktivator eingesetzt wird.

Optional enthaltene Polymer ist vorzugsweise in einer Menge von 0 bis 40 Gew.-%, bevorzugt von 0 bis 20 Gew.-%, besonders bevorzugt in einer Menge von 0 bis 10 Gew.-% enthalten.

In einer bevorzugten Ausführungsform enthält erfindungsgemäße Zusammensetzung weitere Zusatzstoffe. Bevorzugt werden die Zusatzstoffe in einer Menge von 0 bis 5 Gew.-%, besonders bevorzugt von 0 bis 4 Gew.-%, ganz besonders bevorzugt von 0 bis 3,5 Gew.-% eingesetzt. Als Zusatzstoffe können bevorzugt Stabilisatoren, insbesondere Kupfersalze, Farbstoffe, Antistatika, Füllöle, Stabilisatoren, Oberflächenverbesserer, Sikkative, Entformungs-Hilfsmittel, Trennmittel, Antioxidantien, Lichtstabilisatoren, PVC-Stabilisatoren, Gleitmittel, Polyole, Flammschutzmittel, Treibmittel, Schlagzähmodifikatoren und/oder Nukleierungshilfsmittel zugesetzt werden.

Als Schlagzähmodifikatoren sind insbesondere Polydien-Polymere, vorzugsweise Polybutadien, Polyisopren, enthaltend Anhydrid und/oder Epoxigruppen geeignet. Das Polydien-Polymer weist insbesondere eine Glasübergangstemperatur unter 0 °C, bevorzugt unter -10 °C, besonders bevorzugt unter -20 °C auf. Das Polydien-Polymer kann auf der Basis eines Polydien-Copolymers mit Polyacrylaten, Polyethylenacrylaten und/oder Polysiloxanen basieren und mittels der gängigen Verfahren hergestellt werden, vorzugsweise durch Emulsionspolymerisation, Suspensionspolymerisation, Lösungspolymerisation, Gasphasenpolymerisation.

In einer weitem bevorzugten Ausführungsform der Erfindung wird als Zusatzstoff Polyol eingesetzt, um die Schlagzähigkeit zu verbessern, z.B. erhältlich von der Rhein Chemie Rheinau GmbH unter der Bezeichnung Addonyl® 8073. Ebenfalls einsetzbar sind Polyol-triamine geeignet, um die Tieftemperatur-Schlagzähigkeit zu verbessern. Ein geeignetes Produkt ist Addonyl® 8112. Vorzugsweise werden die Polyole im Konzentrationsbereich 1 - 20 Gew.-% eingesetzt.

Die optionale Zugabe von Füll- und/oder Verstärkungsstoffen und weiteren Zusatzstoffen kann vor oder zusammen mit der Zugabe von Katalysator und/oder Aktivator erfolgen.

In einer weiteren Ausführung der vorliegenden Erfindung kann die Polymerisation nach einem geeigneten Formgebungsverfahren, vorzugsweise Spritzguss, Standgussverfahren, Rotationsgussverfahren, durchgeführt werden.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Ein weiterer Gegenstand der vorliegenden Erfindung ist die Verwendung des erfindungsgemäßen Gußpolyamids für die Herstellung von Rollen vorzugsweise für Personenaufzüge und Halbzeuge, vorzugsweise Behälter, Zahnräder, Rohre, Stäbe und Platten für den Maschinenbau und die Automobilindustrie.

Die nachfolgenden Beispiele dienen der Erläuterung der Erfindung, ohne dabei limitierend zu wirken.

### Ausführungsbeispiele:

### Reagenzien:

Caprolactam, trocken (EP > 69 °C) von der Firma Lanxess Deutschland GmbH

Aktivator Addonyl® 8108, ein Hexamethylen-Diisocyanat (HDI)-Biuret, 70% in N-Ethylpyrolidon, kommerziell erhältlich bei der Rhein Chemie Rheinau GmbH,

Addonyl® Kat NL von der Rhein Chemie Rheinau GmbH, ca. 18 % Natriumcaprolactamat in Caprolactam.

Addocat ® 105 = ein Triethylendiamin in Dipropylenglykol, kommerziell erhältlich bei der Rhein Chemie Rheinau GmbH

Addolink ® TT= ein TDI-Uretdion der Rhein Chemie Rheinau GmbH

### Geräte:

Die verwendete Apparatur zur Schmelzaufbereitung bestand aus:
● 2 Dreihalskolben (500 ml) im Ölbad beheizt
● 2 KPG-Rührer mit Hülse
● 2 Gaskappen je 1 mit und 1 ohne Hahn
● 1 Vakuumpumpe mit Kühlfalle und Manometer.

Die verwendete Apparatur zur Temperaturmessung bestand aus:
● Temperaturmessgerät Testo 175-T3 mit IR-Serial Interface
● Thermodraht zum Verbleib in der ausgehärteten Probe
● Becherglas 600 ml (hohe Form) und einer
● Beheizung für das Becherglas (Metallblock, Ölbad).

### Durchführung und Messung:

Kolben A wurde mit 196,8 g Caprolactam und 3,2 g Aktivator, Kolben B mit 192 g Caprolactam, 8 g Katalysator Addonyl® Kat NL und bei den erfindungsgemäßen Versuchen mit 0,2 g Addocat®105 beschickt.

Die Schmelzen aus den Kolben A und B wurden bei 110 - 130 °C (± 2 °C) in einem Ölbad unter Vakuum (<15 mbar) 20 Minuten aufbereitet.

Nach Belüften mit Stickstoff wurden Komponenten aus Kolben A und Kolben B in einen Dreihalskolben vereinigt, kurz durchgerührt und in das 600 ml Becherglas überführt.

Die Formtemperatur (Becherglas) betrug 160° C. Die Polymerisationszeit betrugt in der Regel 10 - 20 Minuten.

| Aktivator in Kolben A | ohne Coaktivator (vergl.) Topfzeit (s) | mit Coaktivator (erf.) Topfzeit (s) |
|---|---|---|
| Addonyl® 8108 (115°C*) | 550 | 400 |
| Addolink ® TT (125°C*) | 700 | 580 |

| | | |
|---|---|---|
| Vergleichsbeispiel = vergl., Erfindungsgemäß = erf. *Starttemperatur der Polymerisationsschmelze | | |

Die Beispiele zeigen, dass die erfindungsgemäße Zusammensetzung auch bei Temperaturen, bei denen die Polymerisation langsam verläuft, zu kurzen Topfzeiten führt. Dadurch können kürzere Taktzeiten bei der Herstellung von Gussformteilen mit den verschiedenen Formgebungsverfahren, wie Stand-, Rotation- oder Spritzgussverfahren, erzielt werden, bei verbesserten Eigenschaften der Gussteile.

## Patentansprüche

1. Gußpolyamid erhältlich durch die Umsetzung von
a) mindestens einem Katalysator für die anionische Polymerisation von Lactamen;
b) mindestens einem Aktivator für die anionische Polymerisation,
c) mindestens einem tert.-Amin und/oder Dibutylzinndilaurat als Coaktivator und
d) mindestens einem Lactam bei Temperaturen von mindestens 80°C.

2. Gußpolyamid nach Anspruch 1, **dadurch gekennzeichnet, dass** es sich bei dem Katalysator um mindestens eine Verbindung ausgewählt aus der Gruppe der Lactam-Magnesium-Halogenide, bevorzugt Lactam-Magnesium-Bromide, Alkali-Alumo-Dilactamate, bevorzugt Natrium-Alumo-Dilactamate, Alkali- und/oder Erdalkalilactamate, bevorzugt Natrium-, Kalium- und/oder Magnesiumlactamate handelt.

3. Gußpolyamid nach einem oder mehreren der Ansprüche 1 bis 2, **dadurch gekennzeichnet, dass** es sich bei dem Aktivator um mindestens eine Verbindung ausgewählt aus der Gruppe der Isocyanate, Isocyanurate, Biurete, Allophanate, Uretdione und/oder Carbodiimide handelt.

4. Gußpolyamid nach einem oder mehreren der Ansprüche 1 bis 3, **dadurch gekennzeichnet, dass** es sich bei dem tert.-Amin um Triethylendiamin handelt.

5. Gußpolyamid nach einem oder mehreren der Ansprüche 1 bis 4, **dadurch gekennzeichnet, dass** das Lactam der allgemeinen Formel 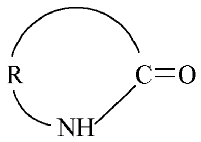 entspricht, wobei R eine Alkylengruppe mit 3 bis 13 Kohlenstoffatomen darstellt.

6. Gußpolyamid nach einem oder mehreren der Ansprüche 1 bis 5, **dadurch gekennzeichnet, dass** diese die bezogen auf Lactam folgende Anteile enthalten
a) 0,1 bis 3 Gew.%, bevorzugt 0,2 bis 1,5 Gew.% mindestens eines Katalysators
b) 0,1 bis 2 Gew.%, bevorzugt 0,5 bis 1 Gew.% mindestens eines Aktivators und
c) 0,0005 bis 0,2 Gew.%, bevorzugt 0,005 bis 0,1 Gew.% mindestens eines tert.-Amins und/oder Dibutylzinndilaurats als Coaktivator.

7. Verfahren zur Herstellung von Gußpolyamid nach einem oder mehreren der Ansprüche 1 bis 6, **dadurch gekennzeichnet, dass**
- mindestens eine Lactamschmelze mit Katalysator a) und gegebenenfalls Coaktivator c) und
- mindestens eine Lactamschmelze mit Aktivator b) und gegebenenfalls Coaktivator c) und gegebenenfalls
- eine Lactamschmelze mit Coaktivator c),
wobei der Coaktivator in mindestens einer der Lactamschmelzen enthalten sein muss,
bei Temperaturen von mindestens 80°C, bevorzugt im Bereich von 100° bis 160°C, besonders bevorzugt im Bereich von 110 bis 130° C, vermischt und in einer Form polymerisiert werden.

8. Verwendung des Gußpolyamids nach einem oder mehreren der Ansprüche 1 bis 7 zur Herstellung von Rollen, vorzugsweise für Personenaufzüge und Halbzeuge, vorzugsweise Behälter, Zahnräder, Rohre, Stäbe und Platten für den Maschinenbau und die Automobilindustrie.

## Geänderte Patentansprüche

### Geänderte Patentansprüche gemäss Regel 137(2) EPÜ.

**1.** Gußpolyamid erhältlich durch die Umsetzung von
a) mindestens einem Katalysator für die anionische Polymerisation von Lactamen;
b) mindestens einem Aktivator für die anionische Polymerisation,
c) mindestens einem tert.-Amin und/oder Dibutylzinndilaurat als Coaktivator und
d) mindestens einem Lactam bei Temperaturen von mindestens 80 bis 130°C, vorzugsweise 110 bis 130°C.

**2.** Gußpolyamid nach Anspruch 1, **dadurch gekennzeichnet, dass** es sich bei dem Katalysator um mindestens eine Verbindung ausgewählt aus der Gruppe der Lactam-Magnesium-Halogenide, bevorzugt Lactam-Magnesium-Bromide, Alkali-Alumo-Dilactamate, bevorzugt Natrium-Alumo-Dilactamate, Alkali- und/oder Erdalkalilactamate, bevorzugt Natrium-, Kalium- und/oder Magnesiumlactamate handelt.

**3.** Gußpolyamid nach einem oder mehreren der Ansprüche 1 bis 2, **dadurch gekennzeichnet, dass** es sich bei dem Aktivator um mindestens eine Verbindung ausgewählt aus der Gruppe der Isocyanate, Isocyanurate, Biurete, Allophanate, Uretdione und/oder Carbodiimide handelt.

**4.** Gußpolyamid nach einem oder mehreren der Ansprüche 1 bis 3, **dadurch gekennzeichnet, dass** es sich bei dem tert.-Amin um Triethylendiamin handelt.

**5.** Gußpolyamid nach einem oder mehreren der Ansprüche 1 bis 4, **dadurch gekennzeichnet, dass** das Lactam der allgemeinen Formel 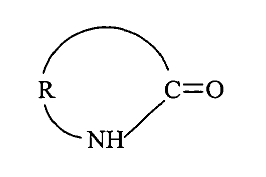 entspricht, wobei R eine Alkylengruppe mit 3 bis 13 Kohlenstoffatomen darstellt.

**6.** Gußpolyamid nach einem oder mehreren der Ansprüche 1 bis 5, **dadurch gekennzeichnet, dass** diese die bezogen auf Lactam folgende Anteile enthalten
a) 0,1 bis 3 Gew.%, bevorzugt 0,2 bis 1,5 Gew.% mindestens eines Katalysators
b) 0,1 bis 2 Gew.%, bevorzugt 0,5 bis 1 Gew.% mindestens eines Aktivators und
c) 0,0005 bis 0,2 Gew.%, bevorzugt 0,005 bis 0,1 Gew.% mindestens eines tert.- Amins und/oder Dibutylzinndilaurats als Coaktivator.

**7.** Verfahren zur Herstellung von Gußpolyamid nach einem oder mehreren der Ansprüche 1 bis 6, **dadurch gekennzeichnet, dass**
- mindestens eine Lactamschmelze mit Katalysator a) und gegebenenfalls Coaktivator c) und
- mindestens eine Lactamschmelze mit Aktivatorb) und gegebenenfalls Coaktivator c) und gegebenenfalls
- eine Lactamschmelze mit Coaktivatorc),
wobei der Coaktivator in mindestens einer der Lactamschmelzen enthalten sein muss,
bei Temperaturen von mindestens 80°C bis 130°C, bevorzugt im Bereich 110 bis 130° C, vermischt und in einer Form polymerisiert werden.

**8.** Verwendung des Gußpolyamids nach einem oder mehreren der Ansprüche 1 bis 7 zur Herstellung von Rollen, vorzugsweise für Personenaufzüge und Halbzeuge, vorzugsweise Behälter, Zahnräder, Rohre, Stäbe und Platten für den Maschinenbau und die Automobilindustrie.
